# EUROPEAN PATENT SPECIFICATION

(11) **EP 0 306 042 B1**
(45) Date of publication and mention of the grant of the patent: **27.04.1994**
(21) Application number: 88114358.0
(22) Date of filing: 02.09.1988
(51) Int. Cl.: G06F 13/26

(54) **Microprocessor vectored interrupts**
Vektorunterbrechungen für Mikroprozessor
Interruptions vectorielles pour microprocesseur

(30) Priority: 03.09.1987 US 92486
(43) Date of publication of application: 08.03.1989
(73) Proprietor: Bull HN Information Systems Inc., Billerica, MA 01821-4186 (US)
(72) Inventor: Smith, Michael D., Palo Alto California 94303 (US); Lemay, Richard A., Carlisle Massachusetts 01741 (US)
(74) Representative: Altenburg, Udo, Dipl.-Phys.

(56) References cited:
- EP-A- 0 223 413
- WO-A-82/02442
- GB-A- 2 110 442

## Description

This invention relates to data processing systems as specified in the preamble of the claim.

### Description of the Prior Art

Microprocessors in general can accept a limited number of priority interrupts. As an example, the Motorola 68020 32-bit microprocessor has seven interrupt priority levels. Level 7 is the highest priority; level 0 indicates that no interrupts are requested.

As described in the "MC 68020 32-bit Microprocessor User's Manual-Second Edition", published by Prentice-Hall Inc., exception processing for interrupts is processed, wherein the microprocessor fetches a vector number from the interrupting device and displaying the level number of the interrupt being acknowledged on pins A1-A3 of the address bus. If the vector number is not generated by the interrupting device, then external logic requests automatic vectoring and the processor internally generates a vector number which is determined by the interrupt level number.

However in a data processing system having multiple processors and a large number of peripheral subsystems, the number of priority interrupts provided is too limiting.

Accordingly it is an object of the invention to provide an improved data processing system for expanding the interrupt capabilities of microprocessors aiming at having a greater number of priority interrupts.

This and other objects are achieved by an apparatus as characterized in the claim and will become more apparent when taken in conjunction with the following description and attached drawings showing a preferred embodiment of the invention.

### SUMMARY OF THE INVENTION

A data processing system includes a number of subsystems, all coupled in common to a system bus. These subsystems make up a conventional subsystem and in addition includes a non-proprietary subsystem (NPE). The non-proprietary subsystem executes non-proprietary applications software.

The NPE receives interrupt commands from other subsystems. These commands include an indentification or channel number of the NPE, the identification or channel number of the requesting subsystem and a function code describing the operation the NPE is to perform. The NPE includes an interrupt identity register IIR which stores the identification or channel number of the interrupting device.

Upon receiving the command, a central processing unit (CPU) in the NPE receives a priority request which is acknowledged if the CPU is not executing a command of higher priority.

When the command is acknowledged by the CPU, the identification number stored in the IIR is applied to the input address terminals of an interrupt vector array random access memory (RAM). The RAM stores 8 bit offset vectors in each location corresponding to each identification number.

An exception vector table stores pointers which are the starting address of an interrupt routine for processing the requested interrupt. A base address provided by the CPU is added to four times the offset vector value to locate the pointer in the exception vector table. This pointer is the starting address of the interrupt routine.

It is noted that in the current bus-oriented systems the expression "identification number" is preferred over the expression "channel number" from the earlier days in the art when the various input/output ports (= "channels") available to a CPU were distinguished for purposes of input/output operations by the assignment of unique numbers.

### BRIEF DESCRIPTION OF THE DRAWINGS

The manner in which the apparatus of the present invention is constructed and its mode of operation can best be understood in light of the following detailed description together with the accompanying drawings in which:
Figure 1 shows a block diagram of the overall system and includes the detailed logic blocks of a non-proprietary subsystem;
Figure 2 shows the format of some of the commands sent over the system bus;
Figure 3 shows the detailed logic that processes the priority interrupt; and
Figure 4 is a flow diagram showing an example of the use of the invention.

### DESCRIPTION OF THE PREFERRED EMBODIMENT

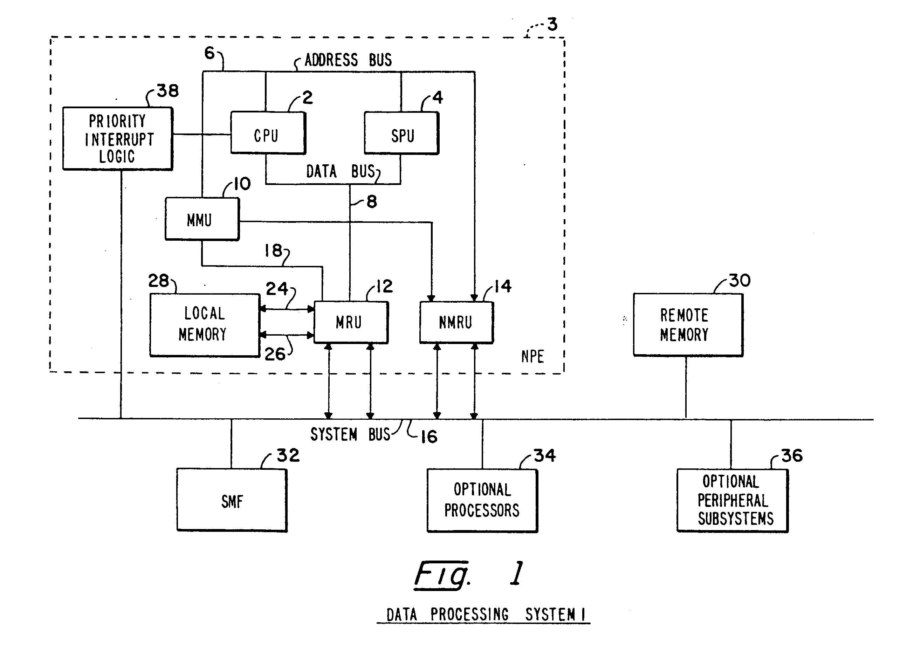

Figure 1 shows a block diagram of a data processing system 1 which includes a system management facility (SMF) 32, a number of optional processors 34, a remote memory 30, a number of optional peripheral subsystems 36 and a non-proprietary subsystem 3, all coupled in common to a system bus 16. The SMF 32 provides start-up and centralized control of the overall data processing system 1. The remote memory 30, the optional processors 34 and the optional peripheral subsystems 36 are conventional in operation.

The non-proprietary system (NPE) 3 which provides a family of platform systems onto which non-proprietary operating systems may be ported. This allows system builders to structure "solutions" by combining a wide range of off the shelf applications software with the standard software of the other conventional subsystems that make up data processing system 1. NPE 3 includes a central processing unit (CPU) 2, a scientific processing unit (SPU) 4, a memory management unit (MMU) 10 and a non-memory reference unit 14, all coupled in common to an address bus 6 and a data bus 8. A memory reference unit (MRU) 12 is coupled to data bus 8 and to MMU 10 by physical address bus 18. A local memory 28 is coupled to the MRU 12 via a data bus 24 and an address bus 26. The MRU 12 and NMRU 14 are both coupled to system bus 16.

The CPU 2 is typically a Motorola 68020 microprocessor which generates 32 address signals over address bus 6, receives or generates 32 data signals over data bus 8 and has a number of control leads. The SPU 4 is typically a Motorola 68881 floating point coprocessor. The SPU 4 and CPU 2 cooperate on the execution of floating point instructions. The CPU 2 fetches and decodes the instructions, computes the effective address and initiates operand references. The SPU 4 then executes the instructions.

A priority interrupt logic 38 processes interrupt commands received from system bus 16.

The MMU 10 is typically a Motorola 68851 paged memory management unit which receives logical addresses from CPU 2 via address bus 6 and generates physical addresses for transfer over bus 18.

The MRU 12 receives physical addresses from the MMU 10 and from system bus 16 and determines whether the local memory 28 or the remote memory 30 locations are addressed. If the transaction is a local memory write, the MRU 12 appends parity to each data byte received from the CPU 2 and stores it in the addressed location in local memory 28. If the transaction is a local memory read, the MRU 12 accesses the data from the addressed location, performs the appropriate parity checks and routes the data to the requesting CPU 2 or SPU 4 or to the system bus 16.

If the transaction is directed to the remote memory 30, then the MRU 12 sends out address, control and data information on system bus 16 for a write operation to remote memory 30. For a read operation the MRU 12 sends the address and control information out on the system bus 16. In this case, the data information (identification or channel number) identifies the sending unit. The response command, therefore, during the second half bus cycle will include the requested data as well as the address of the requesting unit, henceforth termed "channel number".

The MMU 10, MRU 12 supports eight, sixteen, twenty-four and thirty-two bit wide transactions (1, 2, 3 and 4 bytes).

The NMRU 14 controls all non-memory commands including internal NPE 3 (local) non-memory commands and all non-memory commands on the system bus 16 (remote). Local non-memory commands make a number of registers available to the programmer. Remote non-memory commands make available to the programmer a number of registers in the controllers coupled to system bus 16.

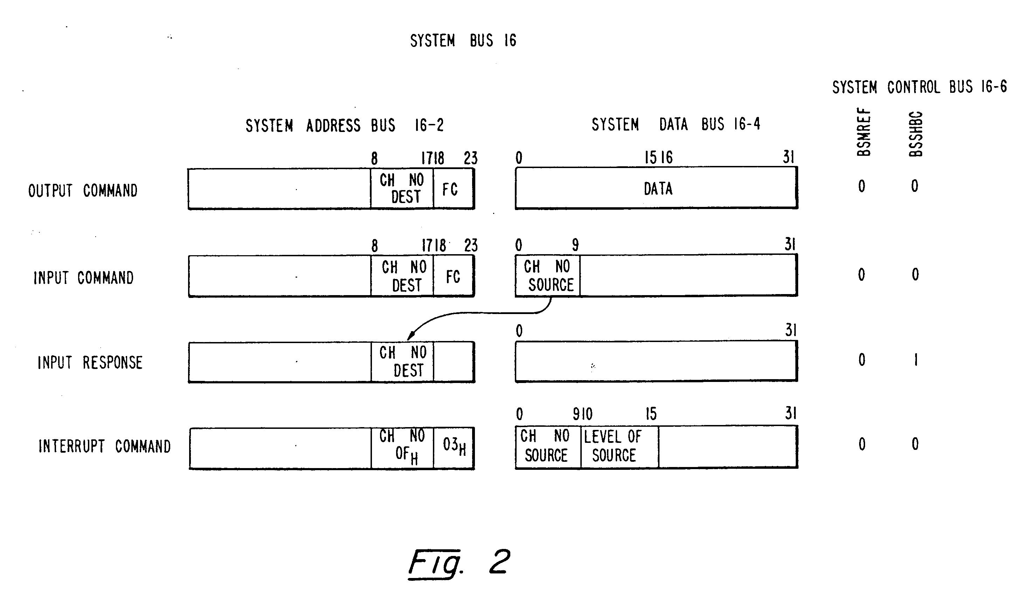

Figure 2 shows the format of some typical non-memory commands. An output command, that is one subsystem coupled to system bus 16 sending data to another subsystem coupled to system bus 16, includes the channel number of the receiving subsystem in address bus 16-2 bit positions 8 through 17, a function code in address bus 16-2 bit positions 18 through 23 and data in data bus 16-4 bit positions 0 through 31. Among the control signals on control bus 16-6 are a memory reference signal BSMREF, indicating that this is not a memory 30 command, and a second half bus cycle signal BSSHBC indicating that this is not a response to a previous command. Each subsystem will respond to its unique channel number. The function code indicates the operation the receiving subsystem will perform.

Also shown is an input command with its input response. Note that data bus 16-4 bit positions 0-9 specify the channel number of the sending subsystem. This channel number will appear in the input response command in address bus 16-2 bit positions 8 through 17. Note that signal BSSHBC indicates that this is a response to a previous input command.

The interrupt command is processed by the elements of this invention. The command includes the channel number hexadecimal 0F of the NPE 3 and a function code of hexadecimal 03. The data bus 16-4 includes the channel number and the interrupt level of the interrupting subsystem or device within the subsystem.

The NPE 3 will process this interrupt if its interrupt level is greater than the current level of the program being executed by CPU 2.

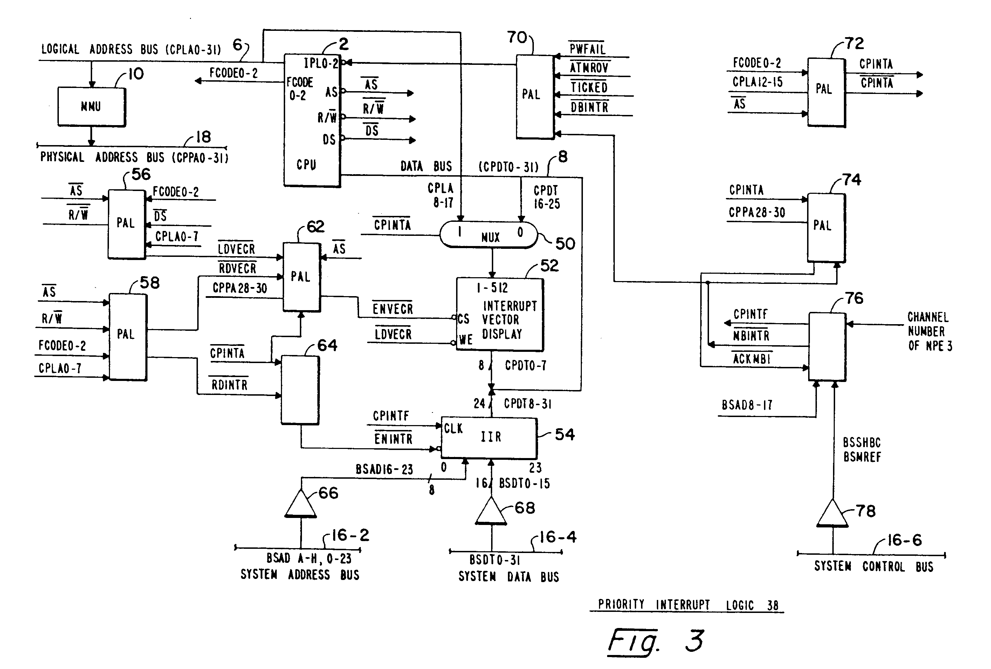

Referring to Figure 3, all commands on the system bus 16 are received by the NPE 3. The channel number signals BSAD 8-17 which are received via address bus 16-2 and a driver 66 are applied to logic 76. The channel number of the NPE 3 is set by switches (not shown). Also control signals BSSHBC and BSMREF are applied to logic 76 via control bus 16-6 and a driver 78. If signals BSAD 10 through 17 indicate a channel number of hexadecimal 0F, then signal ITSAME goes low. Then if signals BSAD 8, BSAD 9, BSMREF and BSSHBC are all low, then signal CPINTF is generated. Signal CPINTF is applied to a clock input of an interrupt identity register (IIR) 54 which then stores the data signals BSDT 0 through 15 via data bus 16-4 and driver 68 and also stores the address signals BSAD 16 through 23. Address signals BSAD 16 through 23 include the function code hexadecimal 03 and the two low order bits of the channel number. Signals BSDT 0-9 specifies the channel number of the source subsystem or device in the subsystem and signals BSDT 10-15 specify the interrupt level of the source.

Logic 76 also generates signal M̅B̅I̅N̅T̅R̅ which is active when low, as indicated by the horizontal line over the signal name. Signal M̅B̅I̅N̅T̅R̅ remains active until the bus acknowledge signal A̅C̅K̅M̅B̅I̅ goes low. Signal M̅B̅I̅N̅T̅R̅ is applied to programmable array logic (PAL) 70 where it competes with other higher priority requests for access to CPU 2. Highest priority (7) is given to signal P̅W̅F̅A̅I̅L̅ which when low indicates an imminent power failure. Next highest priority (6) is given to signal A̅T̅M̅R̅O̅V̅ which when low indicates that an accounting timer counted down to a preset value. Next highest priority (5) is given to signal T̅I̅C̅K̅E̅D̅ which indicates that a real time clock reached a preset value. Next highest priority (3) is given signal D̅B̅I̅N̅T̅R̅ which indicates that an optional unit plugged into the NPE 3 is requesting an interrupt.

Lowest priority (1) is given signal M̅B̅I̅N̅T̅R̅ which generates signals I̅P̅L̅ 2̅ low, I̅P̅L̅ 1̅ low, and I̅P̅L̅ 0̅ high which are applied to CPU 2. If CPU 2 is not processing a higher priority command, then it acknowledges this command by applying to PAL 72 signals FCODE 0 thorugh 2, and address signals CPLA 12 through 15 which are all high to generate interrupt acknowledge signal C̅P̅I̅N̅T̅A̅ low. CPU 2 also generates the address strobe signal A̅S̅ to generate signal CPINTA.

Signal CPINTA, as well as signals M̅B̅I̅N̅T̅R̅ and CPPA 28 through 30, are applied to PAL 74 to force signal A̅C̅K̅M̅B̅I̅ low thereby forcing signal M̅B̅I̅N̅T̅R̅ high.

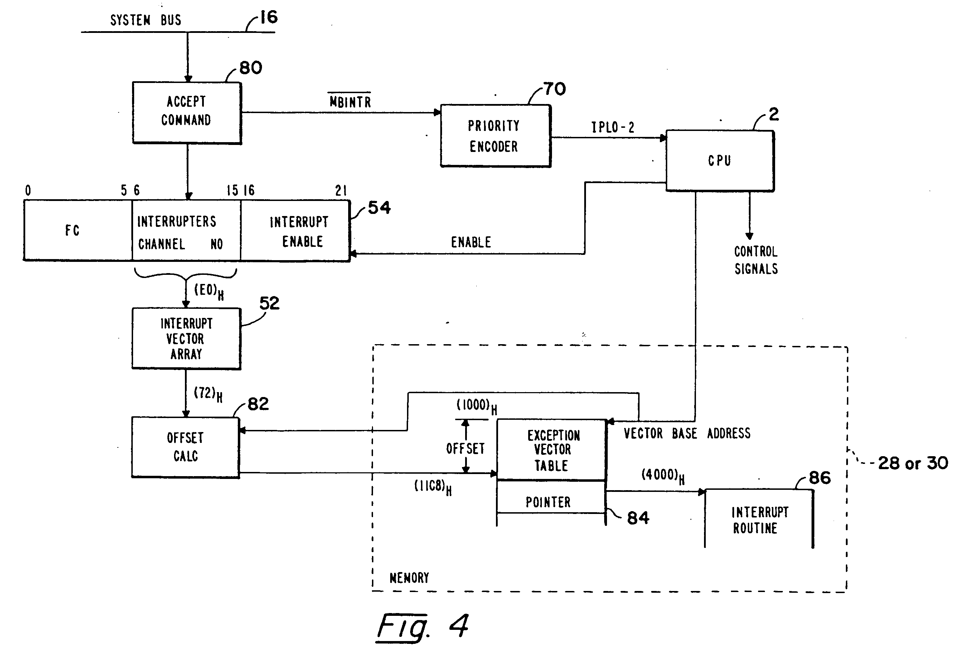

The interrupt command now has access to CPU 2. Signal C̅P̅I̅N̅T̅A̅ is applied to the logic 64 to generate an IIR register 54 output enable signal E̅N̅I̅N̅T̅R̅. The channel number stored in register IIR 54, signals CPDT 16-25 are then applied to the input address terminals of the interrupt vector display, random access memory 52, via data bus 8 and a multiplexer (MUX) 50. RAM 52 is made up of two 1024 x 4 bit random access memories which store the vectors. The function of these vectors is described in conjunction with Figure 4. Signal C̅P̅I̅N̅T̅A̅ low applied to MUX 50 selects the data bus signals CPDT 16-25 during a RAM 52 read operation, and signal CPINTA high selects the address bus 6 signals CPLA 8-17 during a RAM 52 write operation.

RAM 52 is enabled by signal ENVECR low. Signal ENVECR is generated at address strobe time by either the load RAM signal LDVECR or the read RAM signal RDVECR or signal CPINTA and the physical address signals C̅P̅P̅A̅ 2̅8̅, C̅P̅P̅A̅ 2̅9̅ and CPPA 30.

Signals L̅D̅V̅E̅C̅R̅ or R̅D̅V̅E̅C̅R̅ are generated as shown in the Boolean equation during a non-interrupt operation.

Signal L̅D̅V̅E̅C̅R̅ is generated by PAL 56 and signal R̅D̅V̅E̅C̅R̅ is generated by PAL 58. Note that the data strobe signal DS controls the RAM 52 load timing.

PAL 58 also generates signal R̅D̅I̅N̅T̅R̅ address to RAM 52 during a supervisor data space cycle (FCODE 0, FCODE 1 and FCODE 2 equal to octal 5). The interrupts are processed during a CPU space cycle (FCODE 0, FCODE 1 and FCODE 2 equal to octal 7).

The following Boolean expressions describe the logic of the PAL's 56, 58, 62, 70, 72 and 74 and logic 64 and 76.

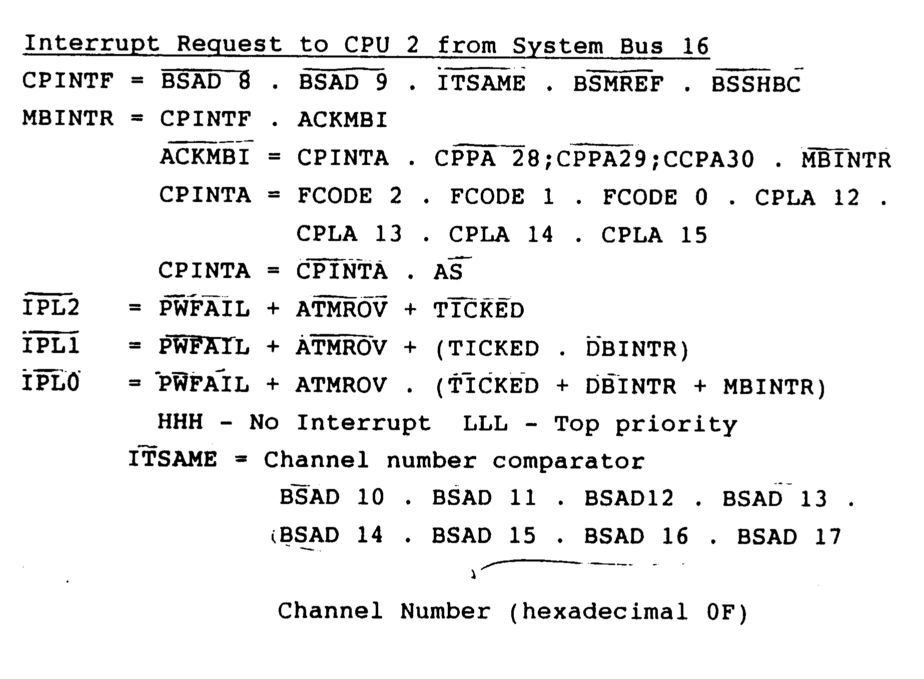

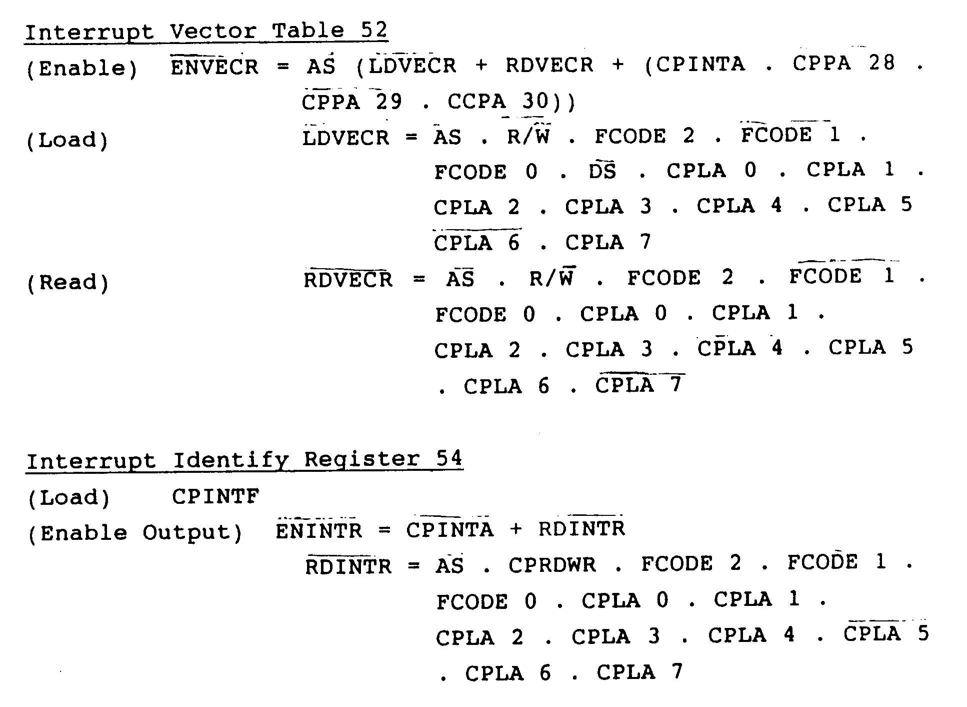

Figure 4 shows an example of the interrupt feature of the invention. The command is received in accept command 80 from system bus 16 and the function code, interruptor's channel number and the interrupt enable signals stored in the IIR register 54. Also interrupt signal MBINTR requests access to priority encoder 70. If no higher priority request is made of priority encoder 70, then IPL 0-2 at octal 1 requests access to the CPU 2. If CPU 2 is not executing a higher priority command than CPU 2 enables the output of IRR register 54.

Assuming the interruptor's channel number is hexadecimal E0 (1110 0000) then that location is addressed. Assume that hexadecimal 72 is stored in location hexadecimal E0, then that value is applied to offset calculator 82. The vector base address, hexadecimal 1000 is also applied to offset calculator 82. The vector base address is the starting address of an exception vector table 84 in memory 28 or 30. Offset calculator 80 adds the base address hexadecimal 1000 to the offset which is four times the contents of the addressed location in RAM 52 (1000_{H} + 4 (72_{H})) and the result, hexadecimal 11C8, is the location of the pointer to the interrupt routine 86 in memory 28 or 30. The contents of location hexadecimal 11C8 is, for example, hexadecimal 4000. Therefore the CPU2 will branch to location hexadecimal 4000 to start the execution of the interrupt routine.

## Claims

1. Data processing system having a first subsystem (NPE 3) and a plurality of second subsystems (36) coupled to a system bus, wherein each one of said second subsystems, when requiring said first subsystem to execute a routine on behalf of said one second subsystem, transmits an interrupt command to said first subsystem, said command comprising a first identification number identifying said first subsystem and a second identification number identifying said interrupting one of said plurality of second subsystems, and wherein said first subsystem grants the interrupt requested by said command according to the relative values of the priority accorded to said interrupt command and the priority of the process currently being executed by a processor (2) of said first subsystem, said first subsystem comprising an apparatus (38) for causing a respective interrupt routine to be placed in execution by said processor,
**characterized by**:
- a register means (54) coupled to said system bus for receiving and storing said second identification numbers from the interrupting ones of said plurality of second subsystems;
- a first addressable store (52) for holding in each of a plurality of addressable locations thereof a relative address unique for each different identification number of said second subsystems;
- a second addressable store (84) for holding in addressable locations thereof an address in the system memory of an interrupt routine unique for each different identification number of said second subsystems;
- first means (76, 74, 70, 72, 64) coupled to said system bus and to said register means (54) and responsive to the first identification number included in a command on said bus for accepting said command if said first identification number corresponds to the identification number assigned to said first subsystem and, upon such acceptance
(i) enables (via signal CPINTF) said register means (54) to receive and store the second identification number included in said command, and
(ii) generates signals (IPL0-2) representing a priority level to be accorded to said command and applies said signals to said processor,
whereupon said processor, if not then executing a process of higher priority level than that represented by said signals, causes said first means to generate a control signal (ENINTR') to cause said register means (54) to apply the second identification number stored therein as an address to said first addressable store (52);
- a calculator (82) for combining a base address with the relative address read out of said first addressable store (52) in response of the identification number stored in said register means (54) to generate an address of said second addressable store (84); and
- a circuit for applying the address generated by said calculator (82) to said second addressable store (84);
whereby the address read out of said second addressable store (84) is employed for accessing the system memory to obtain and place in execution the respective interrupt routine.

## Patentansprüche

1. Datenverarbeitungssystem mit an einen Systembus gekoppelten ersten Subsystem (NPE 3) und mehreren zweiten Subsystemen (36), wobei jeweils dann, wenn einzelne von den genannten zweiten Subsystemen vom genannten ersten Subsystem die Ausführung einer Routine verlangen, diese genannten einzelnen Subsysteme einen Unterbrechungsbefehl an das genannte erste Subsystem übermitteln, wobei der genannte Befehl eine erste Identifizierungsnummer zur Identifizierung des genannten ersten Subsystems und eine zweite Identifizierungsnummer zur Identifizierung der die Unterbrechung herbeifühenden genannten einzelnen Subsysteme aus der Vielzahl der zweiten Subsysteme umfaßt, wobei das erste Subsystem die durch den genannten Befehl angeforderte Unterbrechung entsprechend den dem genannten Unterbrechungsbefehl zugeordneten relativen Prioritätswerten und der Priorität des von einem Prozessor (2) des genannten ersten Subsystems in Ausführung befindlichen Prozesses gewährt, und wobei das genannte erste Subsystem eine Einrichtung (38) umfaßt, die in der Lage ist, eine entsprechende Unterbrechungsroutine vom genannten Prozessor ausführen zu lassen,
**gekennzeichnet durch**
- ein mit dem genannten Systembus gekoppeltes Register (54) für den Empfang und die Speicherung der genannten zweiten Identifizierungsnummern von den die Unterbrechung herbeiführenden genannten einzelnen Subsystemen aus der Vielzahl der zweiten Subsysteme;
- einen ersten adressierbaren Speicher (52) zur Speicherung von für jede unterschiedliche Identifizierungsnummer der genannten einzelnen Subsysteme aus der Vielzahl der zweiten Subsysteme charakteristischen relativen Adressen in seinen adressierbaren Speicherplätzen;
- einen zweiten adressierbaren Speicher (84) zur Speicherung von für jede unterschiedliche Identifizierungsnummer der genannten einzelnen Subsysteme aus der Vielzahl der zweiten Subsysteme charakteristischen Systemspeicheradressen der Unterbrechungsroutinen in seinen adressierbaren Speicherplätzen;
- mit dem genannten Systembus und dem genannten Register (54) gekoppelte und auf die auf dem genannten Bus in einem Befehl enthaltene erste Identifizierungsnummer ansprechende erste Mittel (76, 74, 70, 72, 64) zur Annahme dieses Befehls, wenn die genannte erste Identifizierungsnummer der dem genannten ersten Subsystem zugeordneten Identifizierungsnummer entspricht, und nach Befehlsannahme
(i) zur Aktivierung (über das Signal CPINTF) des genannten Registers (54) für die Aufnahme und Speicherung der in dem genannten Befehl enthaltenen zweiten Identifizierungsnummer, und
(ii) zur Erzeugung von Signalen (IPL0-2), die eine dem genannten Befehl zugeordnete Prioritätsstufe repräsentieren, und zur Leitung der genannten Signale zum genannten Prozessor;
woraufhin der genannte Prozessor - vorausgesetzt, er führt nicht gerade einen Prozeß von höherer Priorität als sie durch die genannten Signale repräsentiert ist, aus - die genannten ersten Mittel veranlaßt, ein Steuersignal (ENINTR') zu erzeugen, das das genannte Register (54) veranlaßt, die darin gespeicherte zweite Identifizierungsnummer als Adresse an den genannten ersten adressierbaren Speicher (52) zu geben;
- einen Rechner (82) zum Kombinieren einer Basisadresse mit der aus dem genannten ersten adressierbaren Speicher (52) aufgrund der in dem genannten Register (54) gespeicherten Identifizierungsnummer ausgelesenen relativen Adresse, um eine Adresse des genannten zweiten adressierbaren Speichers (84) zu erzeugen; und
- eine Schaltung, um die vom genannten Rechner (82) erzeugte Adresse dem genannten zweiten adressierbaren Speicher (84) zuzuführen;
wobei die aus dem genannten zweiten adressierbaren Speicher (84) ausgelesene Adresse zum Zugriff auf den Systemspeicher verwendet wird, um die betreffende Unterbrechungsroutine abzurufen und zur Durchführung zu bringen.

## Revendications

1. Système de traitement des données comportant un premier sous-système (NPE 3) et une pluralité de seconds sous-systèmes (36) couplés à un bus du système, dans lequel chacun desdits seconds sous-systèmes, lorsqu'il est demandé audit premier sous-système d'exécuter une routine pour le compte de ce dit second sous-système, transmet une instruction d'interruption audit premier sous-système, ladite instruction comprenant un premier numéro d'identification identifiant ledit premier sous-système et un second numéro d'identification identifiant celui de ladite pluralité de seconds sous-systèmes qui provoque l'interruption, et dans lequel ledit premier sous-système accorde l'interruption demandée par ladite instruction en fonction des valeurs relatives de la priorité accordée à ladite instruction d'interruption et de la priorité du processus actuellement en cours d'exécution par un processeur (2) dudit premier sous-système, ledit premier sous-système comprenant un appareil (38) pour faire en sorte qu'une routine d'interruption respective soit mise en exécution par ledit processeur,
système caractérisé
- par des moyens formant registre (54) couplés audit bus du système pour recevoir et mémoriser les seconds numéros d'identification en provenance de ceux de ladite pluralité de seconds sous-systèmes qui provoquent une interruption;
- une première mémoire adressable (52) pour mémoriser, à chacune des positions d'une pluralité de ses positions adressables, une adresse relative unique pour chaque numéro d'identification différent desdits seconds sous-systèmes;
- une seconde mémoire adressable (84) pour mémoriser en ses positions adressables, une adresse, en mémoire du système, d'une routine d'interruption unique pour chaque numéro d'identification différent desdits seconds sous-systèmes;
- des premiers moyens (76, 74, 70, 72, 64) couplés audit bus du système et auxdits moyens formant registre (54) et sensibles au premier numéro d'identification inclus dans une instruction envoyée sur ledit bus pour accepter ladite instruction si ledit premier numéro d'identification correspond au numéro d'identification assigné audit premier sous-système et, en cas d'une telle acceptation, ces moyens
(i) valident (par l'intermédiaire du signal CPINTF) lesdits moyens formant registre (54) pour recevoir et mémoriser le second numéro d'identification inclus dans ladite instruction, et
(ii) génèrent des signaux (IPL0-2) représentant un niveau de priorité à accorder à ladite instruction et appliquent lesdits signaux audit processeur,
à la suite de quoi ledit processeur, s'il n'est pas en train d'exécuter un processus de niveau de priorité plus élevé que celui représenté par lesdits signaux, fait en sorte que lesdits premiers moyens génèrent un signal de commande (ENINTR') pour faire en sorte que lesdits moyens formant registre (54) appliquent le second numéro d'identification qui y est mémorisé, en tant qu'adresse, à ladite première mémoire adressable (52);
- un calculateur (82) pour combiner une adresse de base avec l'adresse relative lue dans ladite première mémoire adressable (52) en réponse au numéro d'identification mémorisé dans lesdits moyens formant registre (54) pour générer une adresse en ladite seconde mémoire adressable (84); et
- un circuit pour appliquer l'adresse, générée ledit calculateur (82), à ladite seconde mémoire adressable (84);
- ce par quoi l'adresse lue dans ladite seconde mémoire adressable (84) est employée pour accéder dans la mémoire du système pour obtenir et mettre en exécution la routine d'interruption respective.
